# EUROPÄISCHE PATENTSCHRIFT

(11) **EP 1 716 032 B1**
(45) Veröffentlichungstag und Bekanntmachung des Hinweises auf die Patenterteilung: **14.05.2008**
(21) Anmeldenummer: 05701210.6
(22) Anmeldetag: 24.01.2005
(51) Int. Cl.: B60T 13/74, B60T 7/12, B60T 7/08

(54) **VERFAHREN UND VORRICHTUNG ZUM AKTIVIEREN EINER ELEKTRISCHEN PARKBREMSE**
METHOD AND DEVICE FOR ACTIVATING AN ELECTRIC PARKING BRAKE
PROCEDE ET DISPOSITIF POUR ACTIVER UN FREIN DE STATIONNEMENT ELECTRIQUE

(30) Priorität: 09.02.2004 DE 102004006374
(43) Veröffentlichungstag der Anmeldung: 02.11.2006
(73) Patentinhaber: Volkswagen Aktiengesellschaft, 38436 Wolfsburg (DE)
(72) Erfinder: JAGODZINSKY, Volker, 30559 Hannover (DE)
(74) Vertreter: Patentanwälte Bressel und Partner
(86) Internationale Anmeldenummer: PCT/EP2005/000792
(87) Internationale Veröffentlichungsnummer: WO 2005/075270

(56) Entgegenhaltungen:
- WO-A-90/15743
- DE-A1- 4 129 919
- DE-A1- 19 838 886

## Beschreibung

Die Erfindung betrifft ein Verfahren und eine Vorrichtung zum Aktivieren einer elektrischen Parkbremse eines Kraftfahrzeuges, insbesondere eines Straßen-Kraftfahrzeuges.

Aus der DE 198 38 886 A1 ist eine elektrische Feststellbremse oder Parkbremse für ein Kraftfahrzeug bekannt. Der Fahrer des Kraftfahrzeuges betätigt die elektrische Parkbremse beispielsweise über einen Tastschalter. Die Parkbremse dient dazu sicherzustellen, dass das Fahrzeug im abgestellten bzw. geparkten Zustand sich nicht mehr bewegen kann. Beispielsweise können an den Rädern des Kraftfahrzeuges angeordnete Radbremsen der Parkbremse durch selbsthemmend ausgelegte Elektromotor-/Getriebe-Einheiten zur Erreichung der Feststellbremswirkung angesteuert werden. Dadurch wird die Wirkung einer konventionellen mechanischen Feststellbremse erzielt.

Um die elektrische Parkbremse aktivieren zu können, wird elektrische Energie benötigt, die aus dem Bordnetz des Kraftfahrzeuges bezogen werden kann. Beim Abstellen bzw. Parken des Kraftfahrzeuges kommt es insbesondere an Steigungen darauf an, dass die elektrische Energie zuverlässig zur Verfügung steht. Andernfalls kann es dazu kommen, dass das Fahrzeug nicht zuverlässig gegen ein unbeabsichtigtes Wegrollen gesichert wird. Gefährliche Situationen können dann insbesondere bei Fahrzeugen auftreten, in denen die mechanische Kraft des Antriebsmotors unterstützend zum Betätigen einer Betriebsbremse des Kraftfahrzeuges genutzt wird. Wenn bei solchen Fahrzeugen nach dem Abstellen des Antriebsmotors nicht mehr ausreichend elektrische Energie zur Verfügung steht, um den Antriebsmotor erneut zu starten, ist das Kraftfahrzeug nur noch eingeschränkt beherrschbar.

Zur Vermeidung derartiger Situationen ist in der DE 198 38 886 A1 vorgeschlagen worden, eine Notbatterie vorzusehen, deren Energie für zumindest eine Aktivierung der Parkbremse ausreicht. Nachteilig an einer zusätzlich zu der Bordnetzbatterie vorgesehenen Notbatterie ist der damit verbundene Aufwand bei der Konstruktion und Herstellung. Auch ist es wiederum möglich, dass die Notbatterie nicht mehr ausreichend viel Energie enthält oder speichern kann.

Es ist eine Aufgabe der vorliegenden Erfindung, ein Verfahren und eine Vorrichtung zum Aktivieren einer elektrischen Parkbremse eines Kraftfahrzeuges anzugeben, die ein zuverlässiges Arretieren des Kraftfahrzeuges beim Parken ermöglichen.

Die Gegenstände der unabhängigen Patentansprüche 1 und 6 bilden Lösungen dieser Aufgabe. Vorteilhafte Weiterbildungen sind in den jeweiligen Unteransprüchen angegeben.

Gemäß einem wesentlichen Gedanken der Erfindung wird vorgeschlagen, beim Parken des Kraftfahrzeuges einen Antriebsmotor des Kraftfahrzeuges erst nach der Aktivierung der elektrischen Parkbremse abzustellen. Auf diese Weise kann die mechanische Energie des Antriebsmotors noch für die Aktivierung genutzt werden, insbesondere indem der Antriebsmotor einen Generator antreibt und von dem Generator erzeugte elektrische Energie für die Aktivierung verwendet wird. Dadurch kann das Kraftfahrzeug selbst bei schwachem Energiespeicher des Bordnetzes sicher geparkt werden.

Zweckmäßigerweise wird erkannt, dass der Abstellvorgang eingeleitet wird, und danach die Parkbremse aktiviert. Beispielsweise kann überwacht werden, ob der Fahrzeugführer ein Signal zum Abschalten einer Zündanlage einer Brennkraftmaschine gibt. Das Abschalten wird erst dann ausgeführt, wenn die Parkbremse aktiviert ist.

Insbesondere wenn ein mechanisch mit dem Antriebsmotor gekoppelter Generator zur Erzeugung elektrischer Energie genutzt wird, sind gegenüber konventionellen elektrischen Bordnetzen von Kraftfahrzeugen keine Änderungen erforderlich. Insbesondere ist keine Zusatzbatterie erforderlich, die dazu dient, die elektrische Parkbremse zu aktivieren. Vielmehr kann die Erfindung beispielsweise lediglich durch geeignete Ausgestaltung der Steuereinrichtungen in dem Kraftfahrzeug realisiert werden.

Eine Vorrichtung zum Aktivieren der elektrischen Parkbremse weist beispielsweise eine Aktivierungseinrichtung zum Erzeugen eines Aktivierungssignals auf, durch das die elektrische Parkbremse aktiviert wird. Gemäß der Erfindung kann die Aktivierungseinrichtung insbesondere automatisch das Aktivierungssignal erzeugen, wenn das Kraftfahrzeug geparkt wird. Hierzu ist beispielsweise eine Erkennungseinrichtung zum Erkennen einer Einleitung des Parkvorganges vorgesehen. Bei einer Ausgestaltung der Erkennungseinrichtung erkennt diese die Einleitung eines Abstellvorganges zum Abstellen des Antriebsmotors. Beispielsweise wenn ein konventionelles Zündschloss mit Zündschlüssel vorhanden ist, dreht der Fahrzeugführer den Zündschlüssel in die Stellung "aus", um den Antriebsmotor abzustellen. Es ist jedoch ebenso möglich, dass der Fahrzeugführer ein Signal zum Abstellen des Antriebsmotors auf andere Weise gibt, etwa durch Betätigen eines elektrischen Tasters.

Ferner ist bei der Vorrichtung eine Motor-Steuereinrichtung zum Steuern des Abstellvorganges vorgesehen. Die Erkennungseinrichtung ist mit der Motor-Steuereinrichtung und mit der Aktivierungseinrichtung verbunden. Dabei sind die Aktivierungseinrichtung und die Motor-Steuereinrichtung derart ausgestaltet und miteinander kombiniert, dass nach der Einleitung des Abstellvorganges zunächst durch das Aktivierungssignal die elektrische Parkbremse aktiviert wird und der Betrieb des Antriebsmotors währenddessen aufrechterhalten wird und erst danach der Antriebsmotor abgestellt wird.

Es kann eine übergeordnete Steuereinrichtung vorgesehen sein, die die Abfolge der Aktionen der Motor-Steuereinrichtung und der Aktivierungseinrichtung steuert. Diese übergeordnete Steuereinrichtung kann auch weitere Aufgaben übernehmen, wie z.B. die Erkennung der Einleitung des Abstellvorganges (d.h. sie umfasst die Erkennungseinrichtung) und/oder weitere Feststellungen und/oder Ermittlungen, auf die noch näher eingegangen wird und abhängig von deren Ergebnis entschieden wird, ob der Antriebsmotor zum Aktivieren der elektrischen Parkbremse genutzt wird.

Auch können die Motor-/Steuereinrichtung, die Aktivierungseinrichtung und/oder die Erkennungseinrichtung in eine gemeinsame Steuereinrichtung integriert sein. Dieser Fall ist mit der Formulierung, dass die Einrichtungen miteinander verbunden sind, mit umfasst.

Obwohl es möglich ist, den Antriebsmotor bei jedem Parkvorgang erst nach der Aktivierung der Parkbremse abzustellen, wird bevorzugt, dies von einem oder mehreren der folgenden Kriterien abhängig zu machen:
- Betriebszustand einer elektrischen Energieversorgung des Kraftfahrzeuges. Insbesondere wird ein Ladezustand eines Energiespeichers der Energieversorgung ermittelt und/oder festgestellt, ob der Energiespeicher defekt ist. Bei der o.g. Vorrichtung kann hierzu eine Betriebszustandseinrichtung zum Feststellen des Betriebszustandes vorgesehen sein, wobei die Betriebszustandseinrichtung mit der Motor-Steuereinrichtung gekoppelt ist.
- Neigungswinkel des Kraftfahrzeuges. Z.B. gilt dieses Kriterium als erfüllt, wenn der Neigungswinkelbetrag größer oder gleich 8° ist. Beim Neigungswinkel kann zwischen dem Wankwinkel (gemessen in einer Ebene quer zur Fahrzeuglängsachse) und dem Nickwinkel (gemessen in einer Ebene, die die Fahrzeuglängsachse enthält) unterschieden werden. Vorzugsweise wird allein der Nickwinkel für die Entscheidung berücksichtigt, ob das erfindungsgemäße Verfahren ausgeführt wird. Bei der oben genannten Vorrichtung kann eine Ermittlungseinrichtung zum Ermitteln des Neigungswinkels vorgesehen sein, wobei die Ermittlungseinrichtung mit der Motor-Steuereinrichtung gekoppelt ist.
- Stillstand des Kraftfahrzeuges. Insbesondere wird festgestellt, ob alle Räder des Kraftfahrzeuges stillstehen. Hierfür können z.B. Signale von Drehzahlsensoren ausgewertet werden. Drehzahlsensoren haben den Vorteil, dass sie bei Kraftfahrzeugen üblicherweise ohnehin vorhanden sind, beispielsweise in Verbindung mit einem Antiblockiersystem.

Die automatische Aktivierung der Parkbremse mit anschließendem Abstellen des Antriebsmotors kann also davon abhängig gemacht werden, ob der Betriebszustand der elektrischen Energieversorgung dies erfordert, das Kraftfahrzeug bei einem Neigungswinkel geparkt werden soll, der größer als ein Mindest-Neigungswinkel ist, und/oder das Kraftfahrzeug still steht. Auf diese Weise erfüllt die Erfindung ihre Sicherungsfunktion lediglich bei entsprechendem Bedarf und wird die Funktionalität nicht als störend empfunden. Beispielsweise kann das Kraftfahrzeug daher nach dem Parken im ebenen Gelände ohne ein erneutes Starten des Antriebsmotors bewegt werden.

Die erfindungsgemäße Aktivierung der elektrischen Parkbremse kann auf unterschiedliche Weise ausgeführt werden. Beispielsweise kann der Betrieb des Antriebsmotors während eines Zeitraumes definierter Länge ab der Einleitung des Abstellvorganges und/oder ab dem Empfang eines entsprechenden Abstellsignals zum Abstellen des Antriebsmotors aufrechterhalten werden. Alternativ ist es beispielsweise möglich, zunächst festzustellen, ob die Parkbremse aktiviert worden ist, und erst dann ein Signal zu erzeugen, das das Abstellen des Antriebsmotors bewirkt. Bei der zuerst genannten Möglichkeit hat es sich als ausreichend erwiesen, den Betrieb des Antriebsmotors über einen Zeitraum von mindestens einer Sekunde aufrecht zu erhalten.

Die Erfindung wird nachfolgend anhand eines bevorzugten Ausführungsbeispieles näher erläutert. Die Figuren zeigen:
- Fig. 1: schematisch eine Anordnung in einem Straßenkraftfahrzeug mit einer elektrischen Energieversorgung und mit Steuereinrichtungen, die eine Durchführung des erfindungsgemäßen Verfahrens ermöglichen, und
- Fig. 2: ein Zeitdiagramm, dass die zeitliche Reihenfolge von verschiedenen Aktionen und Ereignissen bei der Ausführung des erfindungsgemäßen Verfahrens vereinfacht darstellt.

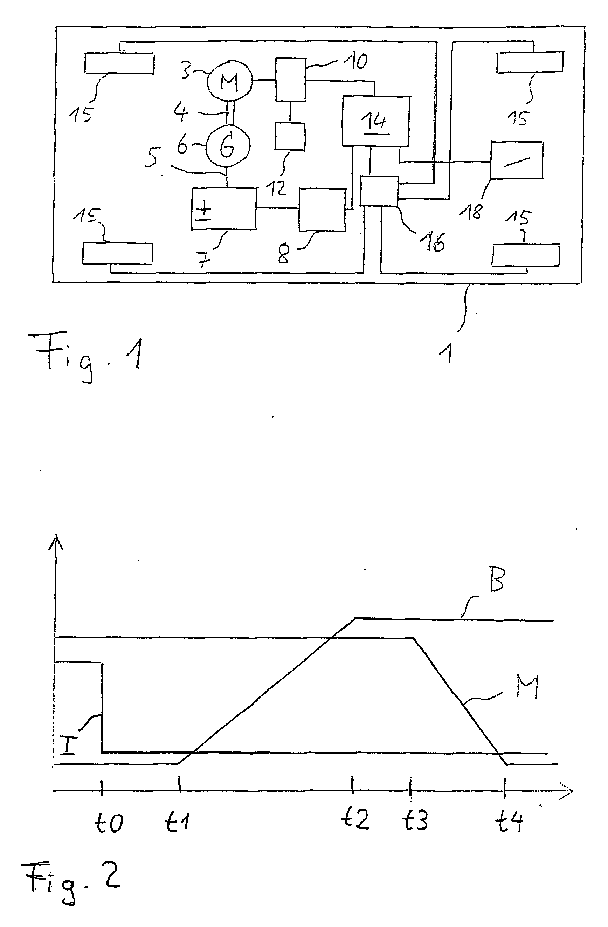

Das in Fig. 1 schematisch innerhalb eines rechteckigen Rahmens dargestellte Kraftfahrzeug 1 weist einen Antriebsmotor 3 auf, der während seines Betriebes über eine mechanische Kopplung 4 einen Generator 6 antreibt. Die von dem Generator 6 erzeugte elektrische Energie wird in ein Bordnetz 5 eingespeist, welches zumindest einen Energiespeicher zur Speicherung elektrischer Energie aufweist, insbesondere eine konventionelle Fahrzeugbatterie. Das Bordnetz 5 ist mit einer Betriebszustandseinrichtung 8 (z.B. mit einer Bordnetz-Steuereinrichtung) verbunden, die insbesondere in der Lage ist, einen Ladezustand des Energiespeichers 7 festzustellen. Ein entsprechendes Ergebnis dieser Feststellung wird laufend und/oder bei Bedarf an eine Steuereinrichtung 14 einer elektrischen Parkbremse (im Folgenden EPB-Steuereinrichtung) übermittelt.

Bei dem Antriebsmotor 3 handelt es sich in dem Ausführungsbeispiel um eine Brennkraftmaschine, die durch Betätigung eines Zündschalters 12 an- und abgestellt werden kann. Der Zündschalter 12 ist mit einer Motor-Steuereinrichtung 10 verbunden, die wiederum mit dem Antriebsmotor 3 verbunden ist. Dadurch ist es möglich, dass die Motor-Steuereinrichtung 10 den Schaltzustand des Zündschalters 12 zwar berücksichtigt, jedoch nicht unmittelbar (d.h. ohne zeitliche Verzögerung) eine entsprechende Aktion ausführt. Vielmehr kann die Motor-Steuereinrichtung 10 abhängig von Signalen, die sie von der EPB-Steuereinrichtung 14 empfängt, den Betrieb des Antriebsmotors 3 aufrecht erhalten, obwohl der Zündschalter in Position "aus" gestellt wurde. Auch ist es möglich, dass die Motor-Steuereinrichtung 10 selbst darüber entscheidet, ob und/oder wie lange der Betrieb des Antriebsmotors 3 aufrechterhalten wird.

Im Bereich der vier Ecken des rechteckigen Rahmens in Fig. 1 ist jeweils ein Raddrehzahlsensor 15 dargestellt, der einem der vier Räder des Kraftfahrzeuges 1 zugeordnet ist. Auf diese Weise können von einer Bewegungseinrichtung 16 (die insbesondere eine Raddrehzahlauswertung aufweist) die Raddrehzahlen aller vier Räder erfasst werden. Insbesondere ist es der Bewegungseinrichtung 16 möglich festzustellen, ob alle vier Räder und damit das Kraftfahrzeug 1 still stehen. Die Bewegungseinrichtung 16 ist mit der EPB-Steuereinrichtung 14 verbunden, so dass die EPB-Steuereinrichtung 14 laufend und/oder bei Bedarf ein Signal von der Bewegungseinrichtung 16 empfängt, wobei aus dem Signal ermittelt werden kann, ob das Fahrzeug still steht.

Ferner ist eine Ermittlungseinrichtung 18 vorgesehen, die einen Neigungswinkel des Kraftfahrzeuges 1, vorzugsweise einen Nickwinkelbetrag, ermittelt. Laufend und/oder bei Bedarf wird ein entsprechendes Signal zu der EPB-Steuereinrichtung 14 übertragen.

Unter Bezugnahme auf Fig. 2 wird nun ein Beispiel für einen Betrieb der in Fig. 1 dargestellten Anordnung näher beschrieben.

Zunächst wird davon ausgegangen, dass sich der Energiespeicher 7 des Bordnetzes 5 in einem voll funktionsfähigen Betriebszustand befindet, d.h. insbesondere ausreichend geladen ist, um eine nicht näher in Fig. 1 dargestellte elektrische Parkbremse zu aktivieren. Die Aktivierung unter Verwendung elektrischer Energie des Bordnetzes kann beispielsweise wie in der DE 198 38 886 A1 beschrieben erfolgen, wobei jedoch die Erzeugung eines entsprechenden Aktivierungssignals in der erfindungsgemäßen Weise erfolgt.

Wird der Zündschalter 12 auf "aus" gestellt, stellt die EPB-Steuereinrichtung 14 aus den von der Betriebszustandseinrichtung 8 empfangenen Signalen fest, dass der Energiespeicher 7 ausreichend geladen ist. Durch Übertragung eines entsprechenden Steuersignals an die Motor-Steuereinrichtung 10 (oder bei Nicht-Übertragung eines Steuersignals) stellt die Motor-Steuereinrichtung 10 fest, dass der Betrieb des Antriebsmotors 3 sofort beendet werden kann und stellt den Antriebsmotor 3 ab.

Dementsprechend wird der Antriebsmotor 3 ebenfalls sofort nach dem Ausschalten des Zündschalters 12 abgestellt, wenn die Ermittlungseinrichtung 18 detektiert, dass ein vorgegebener Neigungswinkelbetrag (z.B. von 5° oder 8°) nicht überschritten ist.

Wird der Zündschalter 12 ausgeschaltet und befindet sich das Kraftfahrzeug 1 nicht im Stillstand, gibt die EPB-Steuereinrichtung 14 bei einer besonders bevorzugten Ausführungsform ein entsprechendes Signal an die Motor-Steuereinrichtung 10 aus, so dass der Betrieb des Antriebsmotors 3 nicht beendet wird (und die elektrische Parkbremse auch nicht aktiviert wird), bis das Fahrzeug 1 still steht. Ab dem Erreichen des Stillstandes kann das erfindungsgemäße Verfahren in der im Folgenden beschriebenen Weise durchgeführt werden.

Detektiert die Bordnetz-Steuereinrichtung 8, dass der Betriebszustand des Energiespeichers 7 eine Aktivierung der elektrischen Parkbremse nicht zuverlässig ermöglicht (z.B. dass ein Defekt des Energiespeichers vorliegt), detektiert die Ermittlungseinrichtung 18, dass sich das Kraftfahrzeug 1 in steilem Gelände befindet (Nickwinkelbetrag beispielsweise größer als 5° oder 8°) und steht das Fahrzeug 1 still, dann werden die folgenden Aktionen durchgeführt: Beim Ausschalten des Zündschalters 12 zum Zeitpunkt t0 (dargestellt in Fig. 2 als sprungartiger Abfall des Signals I von einem hohen Niveau auf ein niedriges Niveau) stellt die EPB-Steuereinrichtung 14 den beschriebenen Zustand des Kraftfahrzeuges 1 fest und gibt ein Signal an die Motor-Steuereinrichtung 10 aus, welches diese veranlasst, den Betrieb des Antriebsmotors 3 noch nicht zu beenden. Dies ist in Fig. 2 durch eine über den Zeitpunkt t0 hinausgehende waagerecht verlaufende Linie M auf hohem Niveau dargestellt. Gleichzeitig oder anschließend gibt die EPB-Steuereinrichtung 14 ein Signal an eine nicht näher dargestellte Aktivierungseinrichtung zum Aktivieren der elektrischen Parkbremse aus, so dass die elektrische Parkbremse beginnend zum Zeitpunkt t1 aktiviert wird und zum Zeitpunkt t2 vollständig aktiviert ist. Dies ist in Fig. 2 durch einen Anstieg der Linie B vom Zeitpunkt t1 bis zum Zeitpunkt t2 dargestellt. Danach verbleibt die elektrische Parkbremse im aktivierten (festgespannten) Zustand. In der Motor-Steuereinrichtung 10 ist eine Zeitspanne vorgegeben (z.B. programmiert), die dem Abstand zwischen dem Zeitpunkt t0 und dem Zeitpunkt t3 entspricht, zu dem das Abstellen des Antriebsmotors 3 von der Motor-Steuereinrichtung 10 eingeleitet wird. Wie in Fig. 2 durch eine vom Zeitpunkt t3 bis zum Zeitpunkt t4 abfallende Linie M dargestellt ist, wird der Antriebsmotor 3 erst nach Verstreichen der Zeitspanne abgestellt. Die Zeitspanne ist vorzugsweise so gewählt, dass sie größer ist als die maximal mögliche Dauer der Aktivierung der elektrischen Parkbremse zuzüglich etwaiger Zeiträume, die für die Ausführung der beschriebenen Steuermaßnahmen benötigt werden. So tritt beispielsweise wie in Fig. 2 dargestellt eine kurze Verzögerung auf, bis nach dem Abschalten des Zündschalters 12 zum Zeitpunkt t0 mit der Aktivierung der elektrischen Parkbremse begonnen wird.

Alternativ wird von der Aktivierungseinrichtung ein Erfolgssignal an die EPB-Steuereinrichtung 14 ausgegeben, wenn die elektrische Parkbremse vollständig aktiviert ist.

Es sind Varianten und Weiterbildungen des erfindungsgemäßen Verfahrens und der erfindungsgemäßen Vorrichtung möglich. Beispielsweise kann eine Deaktivierungseinrichtung vorgesehen sein, mit der die Ausführung des erfindungsgemäßen Verfahrens verhindert werden kann und/oder mit der die bereits aktivierte elektrische Parkbremse ohne erneutes Anlassen des Antriebsmotors deaktiviert (gelöst) werden kann. Dies ermöglicht beispielsweise ein Abschleppen des Kraftfahrzeuges selbst in steilem Gelände. Die Deaktivierungseinrichtung ist beispielsweise unmittelbar mit der EPB-Steuereinrichtung 14 verbunden, die den Betrieb der elektrischen Parkbremse dementsprechend steuert.

## Patentansprüche

1. Verfahren zum Aktivieren einer elektrischen Parkbremse eines Kraftfahrzeuges (1), insbesondere eines Straßen-Kraftfahrzeuges, wobei
- eine Einleitung eines Abstellvorganges zum Abstellen eines Antriebsmotors (3) des Kraftfahrzeuges (1) erkannt wird, **dadurch gekennzeichnet, dass**
- nach der Einleitung des Abstellvorganges zunächst die elektrische Parkbremse aktiviert wird und erst danach
- der Antriebsmotor (3) abgestellt wird.

2. Verfahren nach Anspruch 1, wobei ein Betriebszustand einer elektrischen Energieversorgung (5, 7) zum Aktivieren der elektrischen Parkbremse, insbesondere ein Ladezustand eines Energiespeichers (7) der elektrischen Energieversorgung (5, 7), ermittelt wird und abhängig von dem Betriebszustand entschieden wird, ob der Antriebsmotor (3) zum Aktivieren der elektrischen Parkbremse genutzt wird.

3. Verfahren nach Anspruch 1 oder 2, wobei ein Neigungswinkel des Kraftfahrzeuges (1) ermittelt wird und abhängig von der Größe des Neigungswinkels entschieden wird, ob der Antriebsmotor (3) zum Aktivieren der elektrischen Parkbremse genutzt wird.

4. Verfahren nach einem der Ansprüche 1 bis 3, wobei festgestellt wird, ob das Kraftfahrzeug (1) stillsteht, und wobei die elektrische Parkbremse erst dann aktiviert wird, wenn das Kraftfahrzeug (1) stillsteht.

5. Verfahren nach einem der Ansprüche 1 bis 4, wobei der Betrieb des Antriebsmotors (3) während eines Zeitraumes definierter Länge ab der Einleitung des Abstellvorganges und/oder ab dem Empfang eines entsprechenden Abstellsignals aufrechterhalten wird.

6. Vorrichtung zum Aktivieren einer elektrischen Parkbremse eines Kraftfahrzeuges (1), insbesondere eines Straßen-Kraftfahrzeuges (1), mit:
- einer Aktivierungseinrichtung (14) zum Erzeugen eines Aktivierungssignals, durch das die elektrische Parkbremse aktiviert wird, **gekennzeichnet durch**
- eine Motor-Steuereinrichtung (10) zum Steuern eines Abstellvorganges, **durch** den ein Antriebsmotor (3) des Kraftfahrzeuges (1) abgestellt wird, und
- eine Erkennungseinrichtung (12) zum Erkennen einer Einleitung eines Abstellvorganges zum Abstellen des Antriebsmotors (3), die mit der Aktivierungseinrichtung (14) und der Motor-Steuereinrichtung (10) verbunden ist, wobei die Aktivierungseinrichtung (14) und die Motor-Steuereinrichtung (10) derart ausgestaltet und miteinander kombiniert sind, dass nach der Einleitung des Abstellvorganges zunächst **durch** das Aktivierungssignal die elektrische Parkbremse aktiviert wird und der Betrieb des Antriebsmotors (3) währenddessen aufrechterhalten wird und erst danach der Antriebsmotor (3) abgestellt wird.

7. Vorrichtung nach Anspruch 6, mit einer Betriebszustandseinrichtung (8) zum Feststellen eines Betriebszustandes einer elektrischen Energieversorgung (5, 7) für ein Aktivieren der elektrischen Parkbremse, wobei die Betriebszustandseinrichtung (8) mit der Motor-Steuereinrichtung (10) gekoppelt ist, so dass der Betrieb des Antriebsmotors (3) abhängig von dem Betriebszustand bis zum Aktivieren der elektrischen Parkbremse aufrechterhalten werden kann.

8. Vorrichtung nach Anspruch 6 oder 7, mit einer Ermittlungseinrichtung (18) zum Ermitteln eines Neigungswinkels des Kraftfahrzeuges (1), wobei die Ermittlungseinrichtung (18) mit der Motor-Steuereinrichtung (10) gekoppelt ist, so dass der Betrieb des Antriebsmotors (3) abhängig von der Größe des Neigungswinkels bis zum Aktivieren der elektrischen Parkbremse aufrechterhalten werden kann.

9. Vorrichtung nach einem der Ansprüche 6 bis 8, mit einer Bewegungseinrichtung (16) zum Feststellen, ob das Kraftfahrzeug (1) stillsteht, wobei die Bewegungseinrichtung (16) mit der Motor-Steuereinrichtung (10) gekoppelt ist, sodass der Betrieb des Antriebsmotors (3) abhängig von dem Stillstand des Kraftfahrzeuges (1) bis zum Aktivieren der elektrischen Parkbremse aufrechterhalten werden kann.

## Claims

1. Method for activating an electric parking brake of a motor vehicle (1), in particular of a road motor vehicle, wherein
- initiation of a deactivation process for deactivating a drive engine (3) of the motor vehicle (1) is detected, **characterized in that**
- after the initiation of the deactivation process the electric parking brake is first activated, and only after that
- is the drive engine (3) deactivated.

2. Method according to Claim 1, wherein an operating state of an electric power supply (5, 7) for activation of the electric parking brake, in particular a charge state of a power accumulator (7) of the electric power supply (5, 7) is identified, and as a function of the operating state it is decided whether the drive engine (3) is used to activate the electric parking brake.

3. Method according to Claim 1 or 2, wherein an angle of inclination of the motor vehicle (1) is determined and as a function of the magnitude of the angle of inclination it is decided whether the drive engine (3) is used to activate the electric parking brake.

4. Method according to one of Claims 1 to 3, wherein it is detected whether the motor vehicle (1) is stationary, and wherein the electric parking brake is not activated until the motor vehicle (1) is stationary.

5. Method according to one of Claims 1 to 4, wherein the operation of the drive engine (3) is maintained during a time period of defined length starting from the initiation of the deactivation process and/or starting from the reception of a corresponding deactivation signal.

6. Device for activating an electric parking brake of a motor vehicle (1), in particular of a road motor vehicle (1), having
- an activation device (14) for generating an activation signal by means of which the electric parking brake is activated,
**characterized by**
- an engine control unit (10) for controlling a deactivation process by means of which a drive engine (3) of the motor vehicle (1) is deactivated, and
- a detection device (12) for detecting initiation of a deactivation process for deactivating the drive engine (3), which detection device (12) is connected to the activation device (14) and the engine control device (10),
wherein the activation device (14) and the engine control device (10) are configured and combined with one another in such a way that after the initiation of the parking process the electric parking brake is first activated by the activation signal, and the operation of the drive engine (3) is maintained during this time and only afterwards is the drive engine (3) deactivated.

7. Device according to Claim 6, having an operating state (8) for detecting an operating state of an electric power supply (5, 7) for activating the electric parking brake, wherein the operating state device (8) is coupled to the engine control device (10) so that the operation of the drive engine (3) can be maintained as a function of the operating state until the electric parking brake is activated.

8. Device according to Claim 6 or 7, having an identifying device (18) for identifying an angle of inclination of the motor vehicle (1), wherein the identifying device (18) is connected to the engine control device (10) so that the operation of the drive engine (3) can be maintained as a function of the magnitude of the angle of inclination until the electric parking brake is activated.

9. Device according to one of Claims 6 to 8, having a movement device (16) for identifying whether the motor vehicle (1) is stationary, wherein the movement device (16) is connected to the engine control device (10) so that the operation of the drive engine (3) can be maintained as a function of the stationary state of the motor vehicle (1) until the electric parking brake is activated.

## Revendications

1. Procédé pour activer un frein de stationnement électrique d'un véhicule automobile (1), notamment un véhicule automobile routier, une initiation d'un processus d'arrêt en vue d'arrêter un moteur de propulsion (3) du véhicule automobile (1) étant détectée, **caractérisé en ce qu'**après l'initiation du processus d'arrêt, il y a tout d'abord activation du frein de stationnement électrique et ensuite arrêt du moteur de propulsion (3).

2. Procédé selon la revendication 1, un état opérationnel d'une source d'énergie électrique (5, 7) destinée à activer le frein de stationnement électrique, notamment un état de charge d'un accumulateur d'énergie (7) de la source d'énergie électrique (5, 7), étant déterminé et la décision d'utiliser le moteur de propulsion (3) pour activer le frein de stationnement électrique étant prise en fonction de l'état opérationnel.

3. Procédé selon la revendication 1 ou 2, un angle d'inclinaison du véhicule automobile (1) étant déterminé et la décision d'utiliser le moteur de propulsion (3) pour activer le frein de stationnement électrique étant prise en fonction de l'importance de l'angle d'inclinaison.

4. Procédé selon l'une des revendications 1 à 3, l'immobilisation du véhicule automobile (1) étant détectée et le frein de stationnement électrique n'étant activé qu'une fois que le véhicule automobile (1) est immobilisé.

5. Procédé selon l'une des revendications 1 à 4, le fonctionnement du moteur de propulsion (3) étant maintenu pendant une période d'une durée donnée à partir de l'initiation du processus d'arrêt et/ou à partir de la réception d'un signal d'arrêt correspondant.

6. Dispositif pour activer un frein de stationnement électrique d'un véhicule automobile (1), notamment un véhicule automobile routier, comprenant:
- un dispositif d'activation (14) destiné à générer un signal d'activation par le biais duquel le frein de stationnement électrique est activé, **caractérisé par**
- un dispositif de commande de moteur (10) destiné à commander un processus d'arrêt par le biais duquel un moteur de propulsion (3) du véhicule automobile (1) est arrêté et
- un dispositif de détection (12) pour détecter une initiation d'un processus d'arrêt destiné à arrêter le moteur de propulsion (3) qui est relié avec le dispositif d'activation (14) et le dispositif de commande de moteur (10), le dispositif d'activation (14) et le dispositif de commande de moteur (10) étant configurés et combinés entre eux de telle sorte qu'après l'initiation du processus d'arrêt, il y a tout d'abord activation du frein de stationnement électrique par le biais du signal d'activation, le fonctionnement du moteur de propulsion (3) étant maintenu pendant cette période, et ensuite seulement le moteur de propulsion (3) est arrêté.

7. Dispositif selon la revendication 6, comprenant un dispositif d'état opérationnel (8) destiné à déterminer un état opérationnel d'une source d'énergie électrique (5, 7) pour une - activation du frein de stationnement électrique, le dispositif d'état opérationnel (8) étant connecté au dispositif de commande de moteur (10) de sorte que le fonctionnement du moteur de propulsion (3) puisse être maintenu jusqu'à l'activation du frein de stationnement électrique en fonction de l'état opérationnel.

8. Dispositif selon la revendication 6 ou 7, comprenant un dispositif de détermination (18) pour déterminer un angle d'inclinaison du véhicule automobile (1), le dispositif de détermination (18) étant connecté au dispositif de commande de moteur (10) de sorte que le fonctionnement du moteur de propulsion (3) puisse être maintenu jusqu'à l'activation du frein de stationnement électrique en fonction de l'importance de l'angle d'inclinaison.

9. Dispositif selon l'une des revendications 6 à 8, comprenant un dispositif de détection de mouvement (16) destiné à déterminer si le véhicule automobile (1) est immobilisé, dispositif de détection de mouvement (16) étant connecté au dispositif de commande de moteur (10) de sorte que le fonctionnement du moteur de propulsion (3) puisse être maintenu jusqu'à l'activation du frein de stationnement électrique en fonction de l'immobilisation du véhicule automobile (1).
